# EUROPEAN PATENT APPLICATION

(11) **EP 3 312 909 A1**
(43) Date of publication of application: **25.04.2018**
(21) Application number: 16195219.7
(22) Date of filing: 24.10.2016
(51) Int. Cl.: H01M 4/04, H01M 4/133, H01M 4/134, H01M 4/1393, H01M 4/1395, H01M 4/38

(54) **ELECTROACTIVE COMPOSITES COMPRISING SILICON PARTICLES, METAL NANOPARTICLES AND CARBON NANOSTRUCTURES**

(71) Applicant: BASF SE, 67056 Ludwigshafen am Rhein (DE); Karlsruher Institut für Technologie, 76131 Karlsruhe (DE)
(72) Inventor: SOMMER, Heino, 67056 Ludwigshafen (DE); BREZESINSKI, Torsten, 76149 Karlsruhe (DE); JANEK, Juergen, 35392 Giessen (DE); SCHNEIDER, Artur, 69221 Dossenheim (DE); BREITUNG, Ben, 76133 Karlsruhe (DE)
(74) Representative: BASF IP Association

(57) **Abstract**

The present invention relates to a process for producing electroactive composites for anodes for electrochemical cells, wherein the electroactive composites comprise silicon particles, carbon nanostructures selected from carbon nanotubes and carbon nanofibers, and elemental transition metal nanoparticles.

Further, the present invention relates to electroactive composites for anodes for electrochemical cells obtained or obtainable by the process of the invention, to anode materials for electrochemical cells comprising said electroactive composites for anodes and to electrochemical cells comprising said anode materials.

## Description

The present invention relates to a process for producing electroactive composites for anodes for electrochemical cells, wherein the electroactive composites comprise silicon particles, carbon nanostructures selected from carbon nanotubes and carbon nanofibers, and elemental transition metal nanoparticles.

Further, the present invention relates to electroactive composites for anodes for electrochemical cells obtained or obtainable by the process of the invention, to anode materials for electrochemical cells comprising said electroactive composites for anodes and to electrochemical cells comprising said anode materials.

Secondary batteries, accumulators or "rechargeable batteries" are just some embodiments by which electrical energy can be stored after generation and used when required. Owing to the significantly better energy density, there has been in recent times a move away from the water-based secondary batteries toward development of those batteries in which the charge transport in the electrical cell is accomplished by lithium ions.

In the currently produced lithium ion batteries the cathode typically comprises a lithium-transition metal compound, for example LiCoO₂ or LiFePO₄, and the anode typically comprises graphite into which Li⁰ is intercalated in the charging operation. In order to increase the capacity of the graphite-based anodes, as described in Angew. Chem. 2008, 120, 2972-2989, anodes are being developed which comprise lithium-metal alloys, for example lithium-tin or lithium-silicon alloys. Tin and silicon can absorb large amounts of lithium forming alloys with the stoichiometry Li_{4.4}Sn and Li_{4.4}Si and therefore exhibit much higher capacities than a graphite electrode with intercalated Li⁰. Angew. Chem. 2008, 120, 2972-2989 states that "the consequence of accommodating such a large amount of lithium is large volume expansion-contraction that accompanies their electrochemical alloy formation. These changes lead rapidly to deterioration of the electrode (cracks, and eventually, pulverization), thus limiting its lifetime to only a few charge-discharge cycles." Another major issue in case of Si is the electronically and ionically insulating nature of Si. Thus, in case of Si the use of conductive additives such as carbon black is inevitable to assure reversible electrochemical reactions with Li. In the past, different carbonaceous materials have been tested as additives as they are lightweight and typically have high electronic conductivity. Significant progress in terms of specific capacity and capacity retention has been made by using highly conductive carbons as host materials and polymers as binders. While conductive carbons support the electrical conductivity, polymer additives conduce as linking agents. In particular, host matrix systems with built-in mechanisms against electrode degradation and sufficient void space for volume change have stabilizing effects on the structural integrity of the electrode because they are able to efficiently alleviate the stress/strain of Si during lithiation and delithiation.

J. Mater. Chem., 2009, 19, 4992-4997 discloses electrospun polyacrylonitrile fibers with dispersed Si nanoparticles and their electrochemical behaviors after carbonization.

Journal of Power Sources 195 (2010) 5052-5056 describes a novel carbon-silicon composite nanofiber prepared via electrospinning as anode material for high energy-density lithium ion batteries.

US 9,276,260 discloses an anode active material for a lithium secondary battery, a lithium secondary battery comprising the anode active material, and a method of preparing the anode active material. The anode active material comprises a composite of SiOₓ-carboxylmethyl cellulose (CMC)-carbon nanotube (CNT) in which CNT is bonded to SiOₓ (0<x≤1) through CMC; and a carbon-based material.

The carbon-silicon composites or anode materials described in the literature still have shortcomings with regard to one or more of the properties desired for such materials and the electro-chemical cells produced therefrom. Desirable properties are, for example, high electrical conductivity of the anode materials, maintenance of anode capacity during lifetime, reduced self-discharge of the electrochemical cells during storage, an increase in the lifetime of the electro-chemical cell, an improvement in the mechanical stability of the anode or a reduced change in volume of the anode during a charge-discharge cycle. In general, the desired properties mentioned also make a crucial contribution to improving the economic viability of the electrochemical cell, which, as well as the aspect of the desired technical performance profile of an electrochemical cell, is of crucial significance to the user. Likewise, the known processes for producing electroactive composites for anodes or anode materials are not appropriate for producing new, improved materials.

Proceeding from this prior art, the object was to find a simple, flexible and economic method for the preparation of beneficial electroactive composites for anodes for electrochemical cells comprising silicon particles embedded in conductive carbon. It was also an object to find new electroactive composites for anodes, which improve the performance of the corresponding anodes of lithium ion cells and the performance of the corresponding lithium ion cells themselves, particular in view of an improved electrical conductivity, combined with high anode capacity, high mechanical stability and long lifetime. The corresponding electrochemical cells were to have also a high capacity, cycling stability, efficiency and reliability, low self-discharge, good mechanical stability and low impedances.

This object is achieved by a process for producing an electroactive composite for anodes for electrochemical cells, wherein the electroactive composite comprises
A1) silicon particles, and
A2) carbon nanostructures selected from carbon nanotubes and carbon nanofibers, and
A3) elemental transition metal nanoparticles,
wherein a portion of the silicon particles is embedded in the carbon nanostructures,
comprising the process steps of
a) preparing a mixture comprising silicon particles and cyanamide, and
b) thermal treatment of the mixture prepared in process step a) in a temperature range from 300 °C to 1000 °C, preferably from 500 °C to 700 °C, wherein in process step b) a source of an elemental transition metal is present.

In the context with the present invention, the electrode where during discharging a net negative charge occurs is called the anode and the electrode where during discharging a net positive charge occurs is called the cathode.

The electroactive composites for anodes for electrochemical cells obtained or obtainable by the inventive process are composite materials. Composite materials are generally understood to mean materials, which are solid mixtures which cannot be separated manually and which have different properties than the individual components.

The electroactive composite for anodes for electrochemical cells obtained or obtainable by the inventive process comprises as a first component silicon particles, also referred to hereinafter as silicon particles A1), for short, as a second component carbon nanostructures selected from carbon nanotubes and carbon nanofibers, also referred to hereinafter as carbon nanostructures A2), for short, and as a third component elemental transition metal nanoparticles, also referred to hereinafter as transition metal nanoparticles A3), for short.

The average diameter of the silicon particles A1) can be varied in a wide range. Preferably, the average diameter of the silicon particles is in the range from 0.01 µm to 10 µm, more preferably in the range from 0.01 µm to 1 µm, in particular in the range from 0.01 µm to 0.1 µm.

In one embodiment of the present invention, the process is characterized in that the average diameter of the silicon particles is in the range from 0.01 µm to 10 µm.

The content of elemental silicon Si⁰ in the silicon particles can vary in a wide range due to the origin of the silicon particles and their handling. The silicon particles might comprise beside Si other metals, oxygen or halogens, such as chlorine, and the respective compounds comprising Si and said elements. Preferably, the molar fraction of elemental silicon Si⁰ based on the total amount of silicon in the silicon particles is in the range from 0.6 up to 0.99999, more preferably in the range from 0.8 to 0.99999, in particular in the range from 0.9 to 0.99999.

In one embodiment of the present invention, the process is characterized in that the molar fraction of elemental silicon Si⁰ based on the total amount of silicon in the silicon particles is in the range from 0.6 up to 0.99999.

In the inventive process, the used silicon particles are not all embedded in the formed carbon nanostructures. Only a portion of the silicon particles is embedded in the carbon nanostructures. Preferably, 10% to 50%, more preferably 10% to 30%, in particular 10% to 20%, of the silicon particles are embedded in the carbon nanostructures.

In one embodiment of the present invention, the process is characterized in that 10% to 50% of the silicon particles are embedded in the carbon nanostructures.

The carbon nanostructures, which are formed in the inventive process, show the form of carbon nanotubes and carbon nanofibers determined by TEM (transmission electron microscopy).

The average diameter of the formed carbon nanotubes or carbon nanofibers is preferably in the range from 1 nm to 200 nm, more preferably in the range from 1 nm to 100 nm, in particular in the range from 1 nm to 50 nm, determined by TEM (transmission electron microscopy). The length of the carbon nanotubes or carbon nanofibers can also be determined by TEM.

In one embodiment of the present invention, the process is characterized in that the average diameter of the carbon nanotubes or carbon nanofibers is in the range from 1 nm to 200 nm.

In another embodiment of the present invention, the process is characterized in that the aspect ratio of the carbon tubes or carbon nanofibers is in the range from 250 to 10000.

The ratio of the mass fraction of the silicon particles to the mass fraction of carbon nanostructures in the electroactive composite can be varied in a wide range depending on the ratio of the used amounts of starting materials. Preferably, the ratio of the mass fraction of the silicon particles to the mass fraction of carbon nanostructures in the electroactive composite is in the range from 5 to 40, preferably in the range from 8 to 30, in particular in the range from 10 to 13.

In one embodiment of the present invention, the process is characterized in that the ratio of the mass fraction of the silicon particles to the mass fraction of carbon nanostructures in the electroactive composite is in the range from 5 to 40.

As a third component the electroactive composite comprises elemental transition metal nanoparticles, preferably elemental iron nanoparticles. Elemental transition metal nanoparticles are nanoparticles of an elemental transition metal, whereas an elemental transition metal stands for a transition metal in the metallic form, wherein the oxidation state is zero. The size of the elemental transition metal nanoparticles is preferably in the range from 5 nm to 20 nm determined by transmission electron microscopy. Particularly preferred are elemental iron nanoparticles with a size in the range from 5 nm to 20 nm determined by transmission electron microscopy.

In one embodiment of the present invention, the process is characterized in that the elemental transition metal nanoparticles are elemental iron nanoparticles.

In another embodiment of the present invention, the process is characterized in that the elemental transition metal nanoparticles show a particle size in the range from 5 nm to 20 nm determined by transmission electron microscopy.

In process step a) of the inventive process, a mixture, preferably a mixture, that is pulverous at 20 °C, comprising silicon particles and cyanamide is prepared.

The silicon particles, which are used for the preparation of the mixture in process step a), are almost identical with the silicon particles A1) of the prepared electroactive composite, which are described in detail above, in particular with respect to the average diameter of the silicon particles and with respect to the molar fraction of elemental silicon Si⁰ based on the total amount of silicon in the silicon particles. In particular, the silicon particles used as starting material in process step a) might be different from silicon particles A1) with respect to the exact chemical composition of the surface, which might be changed during process step b).

Preferably the silicon particles of the mixture prepared in process step a) comprise halogen, preferably chlorine, wherein the mass fraction of halogen based on the total mass of the silicon particles is in the range from 0.0005 to 0.005. The small amount of halogen, in particular of chlorine originates in particular from the surface of the silicon particles.

In one embodiment of the present invention, the process is characterized in that the silicon particles of the mixture prepared in process step a), in particular the mixture, which is pulverous at 20 °C, comprise halogen, preferably chlorine, wherein the mass fraction of halogen based on the total mass of the silicon particles in in the range from 0.0005 to 0.005.

Cyanamide (CH₂N₂) is a well-known compound, which is commercially available in large scale.

The ratio of the mass fraction of the silicon particles to the mass fraction of cyanamide in the mixture prepared in process step a) can be varied in a wide ratio depending on the used amounts of silicon particles and of cyanamide. Preferably, the ratio of the mass fraction of the silicon particles to the mass fraction of cyanamide in the mixture prepared in process step a) is in the range from 0.5 to 2.

In one embodiment of the present invention, the process is characterized in that the mass fraction of the silicon particles to the mass fraction of cyanamide in the mixture, in particular in the mixture, that is pulverous at 20 °C, prepared in process step a) is in the range from 0.5 to 2.

The mass fraction of the sum of the mass of silicon particles and of cyanamide based on the total mass of the mixture can be varied in a wide range depending on the amount of additional components added to the mixture, prepared in process step a). Preferably the mass fraction of the sum of the mass of silicon particles and of cyanamide based on the total mass of the mixture is in the range from 0.7 up to 1, more preferably 0.9 up to 1, in particular 0.95 up to 1.

In process step b) of the inventive process the mixture prepared in process step a) is thermally treated in a temperature range from 300 °C to 1000 °C, preferably in a temperature range from 500 °C to 700 °C, wherein in process step b) a source of an elemental transition metal is present.

The source of an elemental transition metal can be brought in contact with the reaction mixture treated in process step b) in several ways, which are in principle known to the person skilled in the art. Non-limiting source of an elemental transition metal can be pieces, sheets or powders of highly pure transition metals or alloys comprising said transition metals. The preferred transition metal is iron. Preferably, the source of an elemental transition metal, in particular elemental iron, is the inner wall of a reactor, in particular of an autoclave, which is made from stainless steel.

In one embodiment of the present invention, the process is characterized in that process step b) is done in an autoclave, wherein the mixture, in particular the mixture, which is pulverous at 20 °C, is in contact with the inner wall of the autoclave, which is made from stainless steel.

The present invention further also provides an electroactive composite for anodes for electrochemical cells, wherein the electroactive composite comprises
A1) silicon particles, and
A2) carbon nanostructures selected from carbon nanotubes and carbon nanofibers, and
A3) elemental transition metal nanoparticles,
wherein a portion of the silicon particles is embedded in the carbon nanostructures, obtained or obtainable, preferably obtained, by a process for producing an electroactive composite for anodes for electrochemical cells as described above. This process comprises the above-described process steps a) and b), especially also with regard to preferred embodiments thereof.

The description and preferred embodiments of the electroactive composite for anodes for electrochemical cells and its components, in particular the description of the silicon particles A1) as a first component, of the carbon nanostructures A2) as a second component and of the elemental transition metal nanoparticles A3) as a third component, correspond to the above description of these components for the inventive process for producing the electroactive composite (A) of the present invention.

In one embodiment of the present invention, the electroactive composite is characterized in that the average diameter of the silicon particles is in the range from 0.01 µm to 10 µm, more preferably in the range from 0.01 µm to 1 µm, in particular in the range from 0.01 µm to 0.1 µm.

In one embodiment of the present invention, the electroactive composite is characterized in that the molar fraction of elemental silicon Si⁰ based on the total amount of silicon in the silicon particles is in the range from 0.6 up to 0.99999, more preferably in the range from 0.8 to 0.99999 in particular in the range from 0.9 to 0.99999.

In one embodiment of the present invention, the electroactive composite is characterized in that 10% to 50%, more preferably 10% to 30%, in particular 10% to 20%, of the silicon particles are embedded in the carbon nanostructures.

In one embodiment of the present invention, the electroactive composite is characterized in that the average diameter of the carbon nanotubes or carbon nanofibers is in the range from 1 nm to 200 nm.

In one embodiment of the present invention, the electroactive composite is characterized in that the aspect ratio of the carbon tubes or carbon nanofibers is in the range from 250 to 10000.

In one embodiment of the present invention, the electroactive composite is characterized in that the ratio of the mass fraction of the silicon particles to the mass fraction of carbon nanostructures in the electroactive composite is in the range from 5 to 40, preferably 8 to 30, in particular 10 to 13.

In one embodiment of the present invention, the electroactive composite is characterized in that the elemental transition metal nanoparticles are elemental iron nanoparticles.

In one embodiment of the present invention, the electroactive composite is characterized in that the average particle size of the elemental transition metal nanoparticles is in the range from 5 nm to 20 nm determined by transmission electron microscopy.

Due to its composition, the inventive electroactive composite is particularly suitable as a material for anodes in electrochemical cells, preferably in Li ion cells, especially in Li ion secondary cells or batteries. More particularly, in the case of use in anodes of Li ion cells and especially of Li ion secondary cells, the inventive electroactive composite are notable for high capacity and good cycling stability, and ensures low impedances in the cell. In addition, anodes comprising the above described electroactive composite show high coulombic efficiency. Moreover, the inventive electroactive composite can be produced in a simple manner and with reproducible quality.

The present invention further also provides for the use of the inventive electroactive composite as described above as part of an electrode for an electrochemical cell.

The present invention further also provides an anode material for an electrochemical cell comprising
A) an electroactive composite as described above,
B) carbon in a polymorph comprising at least 60% sp²-hybridized carbon atoms, and
C) optionally at least one polymer as a binder.

The inventive anode material for an electrochemical cell comprises in addition to the inventive electroactive composite A), which has been described above, as a second component, carbon in a polymorph comprising at least 60% sp²-hybridized carbon atoms, also referred to hereinafter as carbon B) for short, and optionally as component C) a polymer as a binder, also referred to hereinafter as binder C) for short.

The description and preferred embodiments of the electroactive composite A) and both its process of production and the used components correspond to the above description.

Carbon B), which improves the electrical conductivity of the inventive electroactive composite A), can be selected from graphite, carbon black, carbon nanotubes, graphene or mixtures of at least two of the aforementioned substances. Suitable carbons in a conductive polymorph are described in WO 2012/168851 page 4, line 30 to page 6, line 22.

In one embodiment of the present invention, the inventive anode material for an electrochemical cell is characterized in that carbon B) is selected from graphite, graphene, activated carbon and especially carbon black.

In one embodiment of the present invention, the inventive anode material for an electrochemical cell comprises at least one polymer as a binder.

Binder C) can be selected from a wide range of organic polymers. Suitable binders are described in WO 2012/168851 page 6, line 40 to page 7, line 30.

Particularly suitable binders for the inventive anode material for an electrochemical cell are especially polyethylene oxide, cellulose, carboxymethylcellulose, polyvinyl alcohol, polyvinylidene fluoride, polyethylene, polypropylene, polytetrafluoroethylene, polyacrylonitrile-methyl methacrylate copolymers, styrene-butadiene copolymers, tetrafluoroethylene-hexafluoropropylene copolymers, vinylidene fluoride-hexafluoropropylene copolymers, vinylidene fluoridetetrafluoroethylene copolymers, perfluoroalkyl vinyl ether copolymers, ethylenetetrafluoroethylene copolymers, vinylidene fluoride-chlorotrifluoroethylene copolymers, ethylenechlorofluoroethylene copolymers, polyacrylic acid or ethylene-acrylic acid copolymers, optionally at least partly neutralized with alkali metal salt or ammonia, ethylene-methacrylic acid copolymers, optionally at least partially neutralized with alkali metal salt or ammonia, ethylene(meth)acrylic ester copolymers, polyimides and/or polyisobutene, and mixtures thereof.

The selection of the binder is often made with consideration of the properties of any solvent used for production. For example, polyvinylidene fluorides are suitable when N-ethyl-2-pyrrolidone is used as the solvent while polyvinyl alcohol can be processed in aqueous solution. The binder is generally used in an amount of 1 to 20% by weight, based on the total mass of components A), B) and C). Preference is given to using 2 to 15% by weight, especially 5 to 10% by weight.

In one embodiment of the present invention, the inventive anode material for an electrochemical cell comprises in the range from 1 to 20% by weight of carbon C), preferably 2 to 15% by weight, in particular 3 to 10% by weight, based on the total mass of components A), B) and C).

In one embodiment of the present invention, the inventive anode material for an electrochemical cell comprises in the range from 0.1 to 95% by weight of carbon B), preferably 1 to 30% by weight, based on the total weight of components A), B) and C). This carbon can likewise be determined by elemental analysis, for example, in which case the evaluation of the elemental analysis has to take into account the fact that carbon also arrives in organic polymers representing binders, the electroactive composite A) itself and possibly further sources.

In one embodiment of the present invention, the inventive anode material for an electrochemical cell comprises in the range from 1 to 95% by weight of electroactive composite A), preferably 2 to 90% by weight, in particular 3 to 80% by weight, based on the total mass of components A), B) and C).

The mass fraction of the total mass of components A), B) and C) based on the total mass of the anode material for an electrochemical can be varied in a wide range, depending on the presence of solvent residues or additional components. Preferably the mass fraction of the total mass of components A), B) and C) based on the total mass of the anode material for an electrochemical is in the range from 0.8 up to 1, more preferably 0.9 up to 1, in particular 0.95 up to 1.

Inventive electroactive composite A) and inventive anode material are particularly suitable as or for production of anodes, especially for production of anodes of lithium-containing batteries. The present invention provides for the use of inventive electroactive composite A) and inventive anode materials as or for production of anodes for electrochemical cells.

The present invention further also provides an anode, which comprises anode material as described above.

The inventive anode generally comprises electrical contacts for supply and removal of charges, for example an output conductor, which may be configured in the form of a metal wire, metal grid, metal mesh, expanded metal, a metal foil and/or a metal sheet. Suitable metal foils are especially copper foils.

In one embodiment of the present invention, the anode has a thickness in the range from 15 to 200 µm, preferably from 30 to 100 µm, based on the thickness excluding output conductor.

The anode can be produced in a manner customary per se by standard methods as known from relevant monographs. For example, the anode can be produced by mixing the inventive electroactive composite A), optionally using an organic solvent (for example N-methylpyrrolidinone, N-ethyl-2-pyrrolidone or a hydrocarbon solvent), with the optional further constituents of the anode material (electrically conductive constituents and/or organic binder), and optionally subjecting it to a shaping process or applying it to an inert metal foil, for example Cu foil. This is optionally followed by drying. This is done, for example, using a temperature of 80 to 150°C. The drying operation can also take place under reduced pressure and lasts generally for 3 to 48 hours. Optionally, it is also possible to employ a melting or sintering process for the shaping.

The present invention further provides an electrochemical cell, especially a lithium ion secondary cell, comprising at least one anode which has been produced by using electroactive composite A) as described above.

Such cells generally have at least one inventive anode, a cathode, especially a cathode suitable for lithium ion cells, an electrolyte and optionally a separator.

With regard to suitable cathode materials, suitable electrolytes, suitable separators and possible arrangements, reference is made to the relevant prior art (see, for example, Wakihara et al.: Lithium Ion Batteries, 1st edition, Wiley VCH, Weinheim (1998); David Linden: Handbook of Batteries, 3rd edition, McGraw-Hill Professional, New York (2008); J. O. Besenhard: Handbook of Battery Materials, Wiley-VCH (1998)).

Useful cathodes include especially those cathodes in which the cathode material comprises lithium transition metal oxide, e.g. lithium cobalt oxide, lithium nickel oxide, lithium cobalt nickel oxide, lithium manganese oxide (spinel), lithium nickel cobalt aluminum oxide, lithium nickel cobalt manganese oxide or lithium vanadium oxide, or a lithium transition metal phosphate such as lithium iron phosphate. If the intention, however, is to use those cathode materials which comprise sulfur and polymers comprising polysulfide bridges, it has to be ensured that the anode is charged with Li⁰ before such an electrochemical cell can be discharged and recharged.

The two electrodes, i.e. the anode and the cathode, are connected to one another using a liquid or else solid electrolyte. Useful liquid electrolytes include especially nonaqueous solutions (water content generally less than 20 ppm) of lithium salts and molten Li salts, for example solutions of lithium hexafluorophosphate, lithium perchlorate, lithium hexafluoroarsenate, lithium trifluoromethylsulfonate, lithium bis(trifluoromethylsulfonyl)imide or lithium tetrafluoroborate, especially lithium hexafluorophosphate or lithium tetrafluoroborate, in suitable aprotic solvents such as ethylene carbonate, propylene carbonate and mixtures thereof with one or more of the following solvents: dimethyl carbonate, ethyl methyl carbonate, diethyl carbonate, fluoroethylene carbonate, dimethoxyethane, methyl propionate, ethyl propionate, butyrolactone, acetonitrile, ethyl acetate, methyl acetate, toluene and xylene, especially in a mixture of ethylene carbonate and diethyl carbonate. The solid electrolytes used may, for example, be ionically conductive polymers.

A separator impregnated with the liquid electrolyte may be arranged between the electrodes. Examples of separators are especially glass fiber nonwovens and porous organic polymer films, such as porous films of polyethylene, polypropylene etc.

Particularly suitable materials for separators are polyolefins, especially porous polyethylene films and porous polypropylene films.

Polyolefin separators, especially composed of polyethylene or polypropylene, may have a porosity in the range from 35 to 45%. Suitable pore diameters are, for example, in the range from 30 to 500 nm.

In another embodiment of the present invention, separators composed of polyethylene terephthalate nonwovens filled with inorganic particles may be present. Such separators may have a porosity in the range from 40 to 55%. Suitable pore diameters are, for example, in the range from 80 to 750 nm.

Inventive electrochemical cells further comprise a housing which may be of any shape, for example cuboidal, or the shape of a cylinder. In another embodiment, inventive electrochemical cells have the shape of a prism. In one variant, the housing used is a metal-plastic composite film elaborated as a pouch.

The cells may have, for example, a prismatic thin film structure, in which a solid thin film electrolyte is arranged between a film which constitutes an anode and a film which constitutes a cathode. A central cathode output conductor is arranged between each of the cathode films in order to form a double-faced cell configuration. In another embodiment, a single-faced cell configuration can be used, in which a single cathode output conductor is assigned to a single anode/separator/cathode element combination. In this configuration, an insulation film is typically arranged between individual anode/separator/cathode/output conductor element combinations.

The inventive electrochemical cells have high capacity, cycling stability, efficiency and rate capability.

The inventive electrochemical cells can be combined to form batteries, preferably lithium ion batteries.

Accordingly, the present invention further also provides for the use of inventive electrochemical cells as described above in batteries, preferably lithium ion batteries.

The present invention further provides batteries, preferably lithium ion batteries, comprising at least one inventive electrochemical cell as described above. Inventive electrochemical cells can be combined with one another in inventive batteries, for example in series connection or in parallel connection. Series connection is preferred.

Inventive electrochemical cells are notable for particularly high capacities, high power even after repeated charging, and significantly delayed cell death. Inventive electrochemical cells are very suitable for use in devices. The use of inventive electrochemical cells in devices also forms part of the subject matter of the present invention. Devices may be stationary or mobile devices.

Mobile devices are, for example, vehicles which are used on land (preferably particularly automobiles and bicycles/tricycles), in the air (preferably particularly aircraft) and in water (preferably particularly ships and boats). In addition, mobile devices are also mobile appliances, for example cellphones, laptops, digital cameras, implanted medical appliances and power tools, especially from the construction sector, for example drills, battery-powered screwdrivers and battery-powered tackers. Stationary devices are, for example, stationary energy stores, for example for wind and solar energy, and stationary electrical devices. Such uses form a further part of the subject matter of the present invention.

The present invention further provides for the use of inventive electrochemical cells as described above in motor vehicles, bicycles operated by electric motor, aircraft, ships or stationary energy stores.

The use of inventive electrochemical cells in devices gives the advantage of prolonged run time before recharging and a smaller loss of capacity in the course of prolonged run time. If the intention were to achieve an equal run time with electrochemical cells with lower energy density, a higher weight for electrochemical cells would have to be accepted.

The present invention therefore also further provides for the use of inventive electrochemical cells in devices, especially in mobile devices. Examples of mobile devices are vehicles, for example automobiles, bicycles, aircraft, or water vehicles such as boats or ships. Other examples of mobile devices are those which are portable, for example computers, especially laptops, telephones or electrical power tools, for example from the construction sector, especially drills, battery-driven screwdrivers or battery-driven tackers.

The present invention further provides a device comprising at least one electrochemical cell as described above.

The invention is illustrated by the examples, which follow, but these do not restrict the invention.

Figures in percent are each based on % by weight, unless explicitly stated otherwise.

Table 1 summarizes the prepared samples of electroactive composites, which are described in more detail in the following experimental part.

**Table 1: Summery of the prepared anode materials**

| Sample description: | Active material | Additives |
|---|---|---|
| Composite A1 | Si | 10 wt % CNS* |
| Composite A2 | Si | 30 wt % CNS |
| Composite A3 | Si | 50 wt % (CNS + C₃N₄) |
| Comperative Composite C-B1 | Si | 10 wt % CNT** |
| Comperative Composite C-C1 | Si | - |

| | | |
|---|---|---|
| *Carbon nanostructures **Carbon nanotubes | | |

### I. Preparation of electroactive composites

### I.1 Preparation of inventive electroactive composite A1

Composite A1 was synthesized by a one pot pyrolytic approach. In a typical synthesis, silicon nanoparticles (Si-NP) and Cyanamide in a weight ratio of 1:1 were mixed in a tubular stainless steel reactor with metal fittings inside an Argon filled glovebox ([O₂] > 1 ppm, [H₂O] > 1 ppm). The reactor was placed inside a muffel furnace and heated up to 575 °C for 5 h (heating rate 3 K/min); then the reactor was allowed to cool down naturally. After cooling down, the pressure which had developed due to formation of gaseous side products was released carefully and the reactor was opened under Argon atmosphere. The resulting fine dark brown powder showed a darker color than the original Si-NP and was collected and used without further post-treatment.

### I.2 Preparation of inventive electroactive composite A2

Composite A2 was synthesized by a one pot pyrolytic approach. In a typical synthesis, silicon nanoparticles (Si-NP) and Cyanamide in a weight ratio of 1:1,5 were mixed in a tubular stainless steel reactor with metal fittings inside an Argon filled glovebox ([O₂] > 1 ppm, [H₂O] > 1 ppm). The reactor was placed inside a muffel furnace and heated up to 575 °C for 5 h (heating rate 3 K/min); then the reactor was allowed to cool down naturally. After cooling down, the pressure which had developed due to formation of gaseous side products was released carefully and the reactor was opened under Argon atmosphere. The resulting fine dark brown powder showed a darker color than the original Si-NP and was collected and used without further post-treatment.

### I.3 Preparation of inventive electroactive composite A3

Composite A3 was synthesized by a one pot pyrolytic approach. In a typical synthesis, silicon nanoparticles (Si-NP) and Cyanamide in a weight ratio of 1:1,3 were mixed by ballmilling methods (1 h, 400 rpm, ball to powder ratio 20:1). The resulting mixture was placed in a tubular stainless steel reactor with metal fittings inside an Argon filled glovebox ([O₂] > 1 ppm, [H₂O] > 1 ppm). The reactor was placed inside a muffel furnace and heated up to 575 °C for 5 h (heating rate 3 K/min); then the reactor was al-lowed to cool down naturally. After cooling down, the pressure which had developed due to formation of gaseous side products was released carefully and the reactor was opened under Argon atmosphere. The resulting coarse-grained dark brown powder was ballmilled (0.5 h, 400 rpm, ball to powder ratio 20:1) and collected and used without further post-treatment.

### I.4 Preparation of comparative electroactive composite C-B1

Comparative composite C-B1 was synthesized by adding 10 wt. % CNT (multiwalled carbon nanotubes (Sigma Aldrich); purity > 95% C; average diameter: 6 - 9 nm; average length: 5 µm) to the pure Si-NP powder already used in I.1.

### I.5 Comparative electroactive composite C-C1

As comparative composite C-C1 pure Si-NP powder was used.

### II. Preparation of anodes comprising electroactive composites

### II.1 General procedure

In order to obtain comparable results, the Si loadings on the electrodes were equalized.
For electrode preparation, slurry containing an aqueous mixture of the abovementioned composites was mixed thoroughly using a Thinky ARE 200 mixer (Laguna Hills, California) to form a homogenous dispersion. The mixture was coated on Cu-Foil (thickness 17 µm) with a doctor blade and dried at 80 °C in vacuum for 12 h.

### II.1 Preparation of inventive anode AA1

Composite A1 (63 wt%), Super C65 carbon black (22 wt%) and Poly(vinyl alcohol) (15 wt%) were used for electrode preparation of anodes AA1.

### II.2 Preparation of inventive anode AA2

Composite A2 (63 wt%), Super C65 carbon black (22 wt%) and Poly(vinyl alcohol) (15 wt%) were used for electrode preparation of anodes AA2.

### II.3 Preparation of inventive anode AA3

Composite A3 (63 wt%), Super C65 carbon black (22 wt%) and Poly(vinyl alcohol) (15 wt%) were used for electrode preparation of anodes AA3.

### II.4 Preparation of comparative anode A-C-B1

Composite C-B1 (63 wt%), Super C65 carbon black (22 wt%) and Poly(vinyl alcohol) (15 wt%) were used for electrode preparation of comparative anodes A-C-B1.

### II.5 Preparation of comparative anode A-C-C1

comparative composite C-C1 Pure Si-NP powder as comparative composite C-C1, Super C65 carbon black (22 wt%) and Poly(vinyl alcohol) (15 wt%) were used for electrode preparation of comparative anodes A-C-C1.

### III. Testing of the anodes in electrochemical cells

For galvanostatic measurements circular disks (13 mm diameter) were punched out using an EL-Cut electrode cutter (EL-CELL) and transferred to an argon-filled glovebox ([O₂] < 1 ppm and [H₂O] < 1 ppm). Coin-type cells consisting of cathode and lithium foil (thickness 600 µm), separated by a glass microfiber filter (thickness 670 µm), and were assembled inside the glove box. The electrolyte used was a solution of lithium hexafluorophosphate (1 M) solved in fluoro-ethylene carbonate (50 wt %) and ethyl methyl carbonate (50 wt %). The water content in the electrolytes was equal to or less than 10 ppm. Galvanostatic measurements were performed under stable environmental conditions in a BINDER cooled incubator at 25 °C using a MAC-COR Series 4000 (Tulsa, Oklahoma) multichannel battery cycler. The main C-rate estimates to 0.5C in a potential range of 30 mV - 600 mV vs. Li/Li⁺ during lithiation and delithiation. While applying CV steps the cutoff voltage was kept constant until a current drop of 90% was achieved before the following cycle was started. Specific capacity values given in this description are calculated on the basis of Si mass.

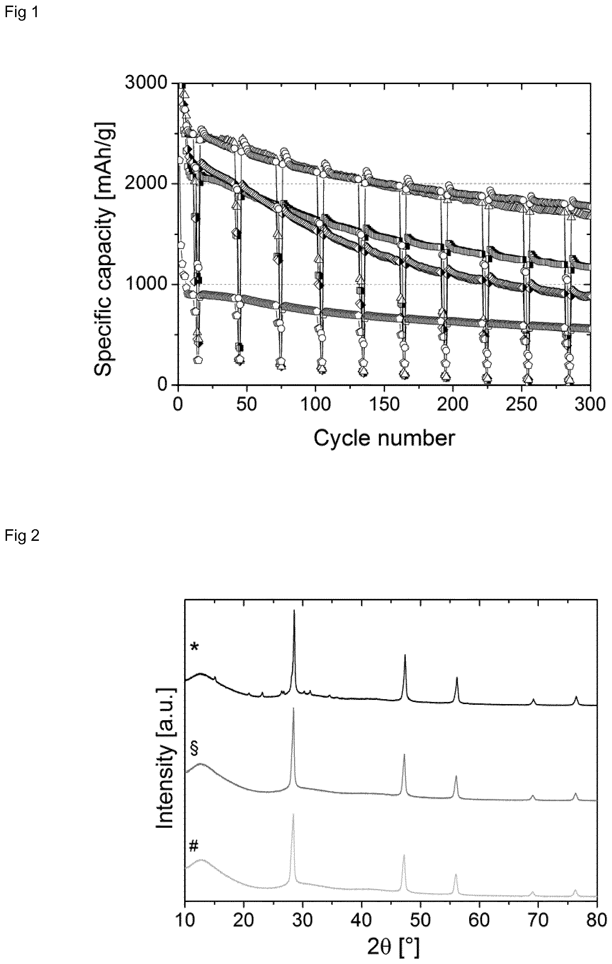

Figure 1.: Specific capacities of the different anodes. Hollow triangle: Anode AA1. Hollow circle: Anode AA2. Half-filled square: Anode A-C-B1. Half-filled diamond: Anode A-C-C1. Hollow pentagon: Anode AA3. The x-axis shows the cycle number, while the y-axis shows the specific capacity [mAh/g].

Table 2 summarizes the measured capacities of the investigated anodes comprising the samples of prepared the electroactive composites, which are described in more detail in the following experimental part.

**Table 2: Capacities of the investigated anodes**

| Capacity* after: | Anode AA1 | Anode AA2 | Anode AA3 | Anode A-C-B1 | Anode A-C-C1 |
|---|---|---|---|---|---|
| 10 cycles | 2500 | 2480 | 900 | 2100 | 2210 |
| 100 cycles | 2120 | 2130 | 730 | 1640 | 1550 |
| 200 cycles | 1920 | 1880 | 630 | 1370 | 1120 |
| 300 cycles | 1780 | 1680 | 560 | 1170 | 880 |

| | | | | | |
|---|---|---|---|---|---|
| *Values are given in mAh/g | | | | | |

Inventive anodes AA1, AA2 and AA3 are composed of the inventive composites containing Si-NPs and CNS. Anode AA3 additionally shows C₃N₄ signals in the XRD pattern. While an amount between 10-30 wt. % of CNS is increasing the capacity dramatically, the capacity is vanishing when reaching around 50 wt. % of CNS and C₃N₄ (Anode AA3). For comparison reasons Anode A-C-B1 was varied by adding carbon nanotubes (CNT) to match with the carbon content of anodes AA1, AA2 and AA3 and to simulate the conductive carbon fibers. Anode A-C-C1 shows the pure Si electrode without any additives.

Figure 2.: XRD pattern of #: Composite A1. §: Composite A2. *: Composite A3. The x-axis shows 2 Theta, while the y-axis shows the intensity [a.u.].

All XRD pattern show the characteristic Si signals with indications for C. Additional reflexes can be seen for Composite A3, which correspond to polymerized C₃N₄.
The absolute conductivity values were measured for equal sheets of electrode material. In this context the conductivity of Anode AA1 is 3.3 times higher than for Anode A-C-C1.

## Claims

1. A process for producing an electroactive composite for anodes for electrochemical cells, wherein the electroactive composite comprises
A1) silicon particles, and
A2) carbon nanostructures selected from carbon nanotubes and carbon nanofibers, and
A3) elemental transition metal nanoparticles,
wherein a portion of the silicon particles is embedded in the carbon nanostructures,
comprising the process steps of
a) preparing a mixture comprising silicon particles and cyanamide, and
b) thermal treatment of the mixture prepared in process step a) in a temperature range from 300 °C to 1000 °C, wherein in process step b) a source of an elemental transition metal is present.

2. The process according to claim 1, wherein the average diameter of the silicon particles is in the range from 0.01 µm to 10 µm.

3. The process according to claim 1 or 2, wherein 10% to 50% of the silicon particles are embedded in the carbon nanostructures.

4. The process according to any of claims 1 to 3, wherein the average diameter of the carbon nanotubes or carbon nanofibers is in the range from 1 nm to 200 nm.

5. The process according to any of claims 1 to 4, wherein the ratio of the mass fraction of the silicon particles to the mass fraction of carbon nanostructures in the electroactive composite is in the range from 5 to 40.

6. The process according to any of claims 1 to 5, wherein the elemental transition metal nanoparticles are elemental iron nanoparticles.

7. The process according to any of claims 1 to 6, wherein the ratio of the mass fraction of the silicon particles to the mass fraction of cyanamide in the mixture prepared in process step a) is in the range from 0.5 to 2.

8. The process according to any of claims 1 to 7, wherein process step b) is done in an autoclave, wherein the mixture is in contact with the inner wall of the autoclave, which is made from stainless steel.

9. An electroactive composite for anodes for electrochemical cells, wherein the electroactive composite comprises
A1) silicon particles, and
A2) carbon nanostructures selected from carbon nanotubes and carbon nanofibers, and
A3) elemental transition metal nanoparticles,
wherein a portion of the silicon particles is embedded in the carbon nanostructures,
obtained or obtainable by a process according to any of claims 1 to 8.

10. An anode material for an electrochemical cell comprising
A) an electroactive composite according to claim 9,
B) carbon in a polymorph comprising at least 60% sp²-hybridized carbon atoms, and
C) optionally at least one polymer as a binder.

11. An anode which comprises anode material according to claim 10.

12. An electrochemical cell comprising at least one anode according to claim 11.

13. A battery comprising at least one electrochemical cell according to claim 12.

14. A device comprising at least one electrochemical cell according to claim 12.
